# EUROPÄISCHE PATENTANMELDUNG

(11) **EP 4 785 798 A1**
(43) Veröffentlichungstag der Anmeldung: **05.08.2026**
(21) Anmeldenummer: 25220283.3
(22) Anmeldetag: 03.12.2025
(51) Int. Cl.: A23B 2/40, A23B 2/44, A23B 2/46, A23B 11/133, A23B 70/30

(54) **VORRICHTUNG ZUR INDIREKTEN ERHITZUNG VON EINEM FLÜSSIGEN LEBENSMITTELPRODUKT UND VERFAHREN DAZU**

(30) Priorität: 03.02.2025 DE 102025103750
(71) Anmelder: KRONES Aktiengesellschaft, 93073 Neutraubling (DE)
(72) Erfinder: Oehmichen, Dr. Thomas, 93073 Neutraubling (DE); Hoeller, Stefan, 93073 Neutraubling (DE); Ottmann, Norbert, 93073 Neutraubling (DE)
(74) Vertreter: Grünecker Patent- und Rechtsanwälte PartG mbB

(57) **Zusammenfassung**

Vorrichtung zur indirekten Erhitzung eines flüssigen Lebensmittelproduktes, umfassend einen Produktvorwärmer, in dem das zu behandelnde flüssige Lebensmittelprodukt vorgewärmt wird, einen Produkterhitzer zum Erhitzen des flüssige Lebensmittelprodukts auf die Behandlungstemperatur und einen Produktvorkühler, in dem das behandelte flüssige Lebensmittelprodukt abgekühlt wird, wobei die im Produktvorkühler anfallende Wärme mindestens teilweise an den Produktvorwärmer übertragen wird, wobei der Produkterhitzer durch einen Hochtemperaturkreislauf mit Wärme versorgt wird, und in diesem Hochtemperaturkreislauf die Wärmesenke einer Wärmepumpe angeordnet ist.

## Beschreibung

Die Erfindung bezieht sich auf eine Vorrichtung und ein Verfahren zur indirekten Erhitzung eines flüssigen Lebensmittelproduktes.

Es ist bekannt, flüssige Lebensmittelprodukte wie z.B. Milch, Joghurt oder Saft, mittels einer indirekten Erhitzung haltbar zu machen (zu pasteurisieren). Dafür werden die flüssigen Lebensmittelprodukte auf eine Behandlungstemperatur erhitzt und eine bestimmte Zeit auf dieser Behandlungstemperatur gehalten (Haltezeit). Anschließend können die so haltbar gemachten flüssigen Lebensmittelprodukte abgefüllt werden.

Da beim Haltbarmachen hohe Temperaturen erreicht werden müssen, sind die entsprechenden Verfahren ressourcenintensiv. Es ist bekannt, in solchen Vorrichtungen zur indirekten Erhitzung von dem erhitzten flüssigen Lebensmittelprodukt nach der Haltezeit Wärme rückzugewinnen, die verwendet wird, um das zu behandelnde Produkt, das der Vorrichtung zugeführt wird, vorzuwärmen. Diese Energierückgewinnung wird als regenerativer Wärmetausch bezeichnet.

Der Erfindung liegt die Aufgabe zugrunde, die Energieeffizienz in einer solchen Vorrichtung weiter zu erhöhen.

Die Erfindung umfasst eine Vorrichtung nach Anspruch 1, eine Lebensmittelverarbeitungsanlage nach Anspruch 10 und ein Verfahren nach Anspruch 11. Weiter Ausführungsformen sind in den abhängigen Ansprüchen beschrieben.

In einer Vorrichtung zur indirekten Erhitzung eines flüssigen Lebensmittelproduktes (im Folgenden auch: Produkt) wird ein Produkt entlang eines Produktbehandlungsweges transportiert und entlang diesem behandelt. Es wird durch einen Eingang der Vorrichtung zugeführt und durch einen Ausgang der Vorrichtung ausgeführt. Wenn der Begriff "stromabwärts" und "stromaufwärts" im Folgenden ohne weitere Erläuterung verwendet wird, können sie sich auf den Produktbehandlungsweg beziehen, also stromabwärts im Produktbehandlungsweg bzw. stromaufwärts im Produktbehandlungsweg beschreiben. In der Vorrichtung wird das Produkt indirekt erhitzt, d.h. es kommt insbesondere nicht mit einem Heizmedium in direkten Kontakt. Die indirekte Erhitzung kann insbesondere unter Verwendung von Wärmetauschern, z.B. Platten- und/oder Röhrenwärmetauschern erfolgen.

Die Vorrichtung umfasst einen Produktvorwärmer, in dem das zu behandelnde (also insbesondere noch nicht pasteurisierte) Produkt vorgewärmt wird. Beispielsweise kann ein Produkt, das beispielsweise bei etwa 20°C (z.B. einer Temperatur zwischen 2°C und 30°C) zugeführt wird, im Vorwärmer auf eine Temperatur von beispielsweise etwa 80°C (z.B. eine Temperatur zwischen 50°C und 120°C) vorgewärmt werden.

Die Vorrichtung umfasst des Weiteren einen, insbesondere stromabwärts des Produktvorwärmers angeordneten, Produkterhitzer zum Erhitzen des Produktes auf die Behandlungstemperatur. Die Behandlungstemperatur kann beispielsweise bei 90°C oder höher liegen, z.B. zwischen 70°C und 140°C liegen.

Die Vorrichtung kann stromabwärts an den Produkterhitzer anschließend eine Heißhaltestrecke umfassen, in der das Produkt auf der Behandlungstemperatur gehalten werden kann.

Die Vorrichtung umfasst des Weiteren einen Produktvorkühler, der insbesondere stromabwärts des Produkterhitzers und der Heißhaltestrecke (falls vorhanden) angeordnet ist. Im Produktvorkühler wird das behandelte (also insbesondere erhitzte und somit pasteurisierte) Produkt abgekühlt. Hierbei kann es insbesondere beispielsweise auf eine Temperatur von etwa 30° (z.B. eine Temperatur zwischen 25°C und 50°C), abgekühlt werden. Die Vorrichtung ist so ausgebildet, dass die im Produktvorkühler anfallende Wärme (also die durch Kühlung des behandelten Produktes erhaltene Wärme) mindestens teilweise an den Produktvorwärmer übertragen wird (regenerativer Wärmetausch).

Der Produkterhitzer wird durch einen Sekundärkreislauf mit Wärme versorgt, der im Folgenden als Hochtemperaturkreislauf bezeichnet wird. Im Hochtemperaturkreislauf ist die Wärmesenke einer Wärmepumpe und optional ein Hochtemperaturkreislauferhitzer, der insbesondere als Wärmetauscher ausgebildet sein kann, angeordnet. Ein als Wärmetauscher ausgebildeter Hochtemperaturkreislauferhitzer kann insbesondere durch Dampf, Warm- oder Heißwasser geheizt werden. Der Hochtemperaturkreislauf kann durch die Wärmesenke der Wärmepumpe und den optionalen Hochtemperaturkreislauferhitzer geheizt werden.

Alternativ kann es vorgesehen sein, den Produkterhitzer auf zwei separate Erhitzer mit jeweils einem Sekundärkreislauf aufzuteilen. Dabei ist insbesondere der zweite Erhitzer stromabwärts des ersten Erhitzers angeordnet. Im Sekundärkreislauf des ersten Erhitzers (Hochtemperaturkreislauf) kann dann die Wärmesenke einer Wärmepumpe angeordnet sein. Im Sekundärkreislauf des zweiten Erhitzers kann dann ein Hochtemperaturkreislauferhitzer angeordnet sein.

Wärmepumpen sind als solche bekannt. Sie umfassen eine Wärmequelle, an der die Wärmepumpe Wärme aufnimmt (die also insbesondere ein an die Wärmequelle angeschlossenes oder mit dieser in Kontakt stehendes Medium kühlt) und eine Wärmesenke, an der die Wärmepumpe Wärme abgibt (die also insbesondere ein an die Wärmesenke angeschlossenes oder mit diese im Kontakt stehendes Medium erhitzt).

Wenn hier und im Folgenden eine Anordnung zwischen einem Auslauf eines Kreislaufs in ein erstes Element und dem Einlauf des Kreislaufs in ein zweites Element die Rede ist, kann dies eine direkte Anordnung zwischen dem Auslauf und dem Einlauf umfassen. Alternativ kann es auch eine Anordnung zwischen dem Einlauf und dem Auslauf mit weiteren Zwischenelementen beschreiben.

Der Hochtemperaturkreislauferhitzer kann im Hochtemperaturkreislauf zwischen dem Auslauf der Wärmesenke und dem Einlauf des Hochtemperaturkreislaufs in den Produkterhitzer angeordnet sein. Somit kann der Hochtemperaturkreislauferhitzer dem Hochtemperaturkreislauf nach dem Durchlauf durch die Wärmesenke noch fehlende Wärme hinzufügen, insbesondere ohne dabei die Wärmesenke zu heizen.

Die Wärmepumpe kann insbesondere so ausgelegt sein, dass dem zu behandelnden Produkt im Produkterhitzer bei der Nennleistung eine bestimmte, vordefinierte Wärmemenge zugeführt wird. Diese vordefinierte Wärmemenge kann insbesondere so gewählt sein, dass die Wärmepumpe bei einem günstigen Betriebspunkt, insbesondere mit einem hohen COP, betrieben werden kann. Sie kann insbesondere geringer als die insgesamt zur Erhitzung (Pasteurisierung) des Produktes benötigte Wärmemenge sein.

Insbesondere kann die Wärmepumpe so ausgelegt sein, dass sie den Hochtemperaturkreislauf auf eine bestimmte vordefinierte, insbesondere konstante, Temperatur heizt. Dadurch kann die Wärmepumpe besonders effizient und schonend betrieben werden.

Die Vorrichtung kann des Weiteren einen Produktkühler zum Kühlen des Produktes umfassen, der durch einen (insbesondere vom Hochtemperaturkreislauf verschiedenen) Sekundärkreislauf gekühlt wird, der im Folgenden als Niedertemperaturkreislauf bezeichnet wird. Der Produktkühler kann insbesondere stromabwärts des Produktvorkühlers angeordnet sein.

Die Wärmequelle der Wärmepumpe (deren Energiesenke im Hochtemperaturkreislauf angeordnet ist) kann in dem Niedertemperaturkreislauf angeordnet sein. Sie kann somit dem Niedertemperaturkreislauf Wärme entziehen, und somit diese zur Erhitzung des Produktes nutzbar machen.

Der Niedertemperaturkreislauf kann einen Niedertemperaturkreislaufkühler umfassen, der insbesondere zwischen Auslauf des Niedertemperaurkreislaufs aus der Wärmequelle und dem Einlauf des Niedertemperaturkreislaufs in den Produktkühler angeordnet sein kann. Somit kann, falls notwendig, dem Niedertemperaturkreislauf durch den Niedertemperaturkreislaufkühler weitere Kühlenergie zugeführt werden, wenn die Wärmequelle allein nicht ausreichen kühlen kann. Der Niedertemperaturkreislaufkühler kann insbesondere als Wärmetauscher ausgebildet sein, und insbesondere preiswerte Kühlenergie, z.B. Kühlturmenergie, nutzen.

Im Niedertemperaturkreislauf kann alternative oder zusätzlich ein Niedertemperaturkreislauferhitzer angeordnet sein. Der Niedertemperaturkreislauferhitzer kann insbesondere zwischen Auslauf des Niedertemperaturkreislaufs aus der Wärmequelle und dem Einlauf des Niedertemperaturkreislaufs in den Produktkühler angeordnet sein kann. Insbesondere kann der Niedertemperaturkreislauferhitzer zwischen dem Auslauf des Niedertemperaturkreislaufs aus der Wärmequelle und einem Einlauf des Niedertemperaturkreislaufs in den Niedertemperaturkreislaufkühler (falls umfasst) angeordnet sein. Alternativ kann der Niedertemperaturkreislauferhitzer zwischen dem Auslauf des Niedertemperaturkreislaufs aus dem Produktkühler und dem Eingang des Niedertemperaturkreislaufs in die Wärmequelle der Wärmepumpe angeordnet sein.

Ein solcher Niedertemperaturkreislauferhitzer kann insbesondere als Wärmetauscher ausgebildet sein, der beispielsweise durch Heiß- oder Warmwasser oder Dampf betrieben werden kann. Mit dem Niedertemperaturkreislauferhitzer kann insbesondere beispielsweise beim Abschalten der Vorrichtung zusätzliche Wärme hinzugeführt werden, falls diese benötigt wird.

Die Wärmequelle der Wärmepumpe kann direkt im Niedertemperaturkreislauf angeordnet sein. Alternativ kann sie in einem Bypass zum Niedertemperaturkreislauf angeordnet sein. Somit kann bedarfsweise nur ein Teil des durch den Niedertemperaturkreislauf strömenden Wärmeträgers durch die Wärmequelle strömen. Dies kann vorteilhaft sein, wenn die Kühlleistung der Wärmepumpe nicht ausreichend sein sollte.

Im Hochtemperaturkreislauf kann ein Hochtemperaturkreislaufkühler angeordnet sein, der insbesondere zwischen dem Auslauf des Hochtemperaturkreislaufs aus der Wärmesenke und dem Einlauf des Hochtemperaturkreislaufs in den Produkterhitzer angeordnet sein kann. Insbesondere kann der Hochtemperaturkreislaufkühler zwischen dem Auslauf des Hochtemperaturkreislaufs aus der Wärmesenke und dem Einlauf des Hochtemperaturkreislaufs in den Hochtemperaturkreislauferhitzer angeordnet sein. Alternativ kann der Hochtemperaturkreislaufkühler zwischen dem Auslauf des Hochtemperaturkreislaufs aus dem Produkterhitzer und dem Eingang des Hochtemperaturkreislaufs in die Wärmesenke der Wärmepumpe angeordnet sein. Ein solcher Hochtemperaturkreislaufkühler kann, insbesondere beim Abschalten der Vorrichtung, eine zusätzliche Kühlung bereitstellen, wenn die Kühlung durch das Produkt allein nicht mehr ausreicht. Ein solcher Hochtemperaturkreislaufkühler kann besonders kosteneffizient mit Kühlturmwasser betrieben werden.

Der Hochtemperaturkreislauf kann mit einem Hochtemperaturkreislaufenergiespeichertank energetisch verbunden sein. Somit kann insbesondere nicht benötigte Wärme, insbesondere beim Herunterfahren der Vorrichtung oder einer Unterbrechung in der Produktzufuhr, in den Hochtemperaturkreislaufenergiespeichertank eingespeichert werden und/oder zusätzliche Wärme, insbesondere beim Hochfahren der Vorrichtung oder nach einer Unterbrechung in der Produktzufuhr, aus dem Hochtemperaturkreislaufenergiespeichertank ausgespeichert werden. Der Hochtemperaturkreislaufenergiespeichertank kann insbesondere zwischen dem Auslauf des Hochtemperaturkreislaufs aus der Wärmesenke und dem Einlauf des Hochtemperaturkreislaufs in den Produkterhitzer angeordnet sein.

Der Niedertemperaturkreislauf kann mit einem Niedertemperaturkreislaufenergiespeichertank energetisch verbunden sein. Somit kann insbesondere nicht benötigte Kälte, insbesondere beim Hochfahren der Vorrichtung oder einer Unterbrechung in der Produktzufuhr, in den Niedertemperaturkreislaufenergiespeichertank eingespeichert werden und/oder zusätzliche Kälte, insbesondere beim Herunterfahren der Vorrichtung oder nach einer Unterbrechung in der Produktzufuhr, aus dem Niedertemperaturkreislaufenergiespeichertank ausgespeichert werden. Der Niedertemperaturkreislaufenergiespeichertank kann insbesondere zwischen dem Auslauf des Niedertemperaturkreislaufs aus der Wärmequelle und dem Einlauf des Niedertemperaturkreislaufs in den Produktkühler (insbesondere zwischen dem Auslauf des Niedertemperaturkreislaufs aus der Wärmequelle und dem Einlauf des Niedertemperaturkreislaufs in den Niedertemperaturkreislaufkühler (falls vorhanden)) angeordnet sein.

Der Hochtemperaturkreislaufenergiespeichertank und/oder der Niedertemperaturkreislaufenergiespeichertank können jeweils als zentraler Energiespeichertank ausgebildet sein. Derartige zentrale Energiespeichertanks können insbesondere mit weiteren Verbrauchern, insbesondere in vor- oder nachgelagerten Prozessen, energetisch verbunden sein, so dass diese Wärme aus den Energiespeichertank entnehmen und/oder Wärme in den Energiespeichertank zuführen können.

Der Hochtemperaturkreislaufenergiespeichertank und der Niedertemperaturkreislaufenergiespeichertank können insbesondere als ein einziger Energiespeichertank ausgebildet sein, z.B. einen Schichtenergiespeichertank, in den gleichzeitig Wärme eingespeichert werden kann (z.B. in eine kühle Schicht) und Wärme entnommen werden kann (z.B. aus einer warmen Schicht).

Die Vorrichtung kann einen Sekundärkreislauf zum Transport von Wärme vom Produktvorkühler zum Produktvorwärmer umfassen. Der regenerative Wärmetausch (zwischen Produktvorkühler und Produktvorwärmer) kann somit über einen Sekundärkreislauf mit einem Sekundärkreislaufmedium, z.B. Wasser, erfolgen. Alternativ können der Produktvorwärmer und der Produktvorkühler als zwei Teile oder Bereiche eines Wärmetauschers ausgebildet sein, der dazu ausgebildet ist, Wärme vom behandelten Produkt auf das zu behandelnde Produkt zu übertragen. Der regenerative Wärmetausch kann somit direkt über einen Wärmetauscher durchgeführt werden.

Die Wärmequelle der Wärmepumpe kann alternativ im Sekundärkreislauf zum Transport von Wärme vom Produktvorkühler zum Produktvorwärmer angeordnet sein. Insbesondere kann der Niedertemperaturkreislauf im Sekundärkreislauf vom Produktvorkühler und Produktvorwärmer angeordnet sein.

Die Vorrichtung kann des Weiteren optional einen weiteren Produktkühler umfassen, der insbesondere stromabwärts des zuvor beschriebenen Produktkühlers angeordnet sein kann. Dieser kann das Produkt insbesondere auf die Weiterverarbeitungstemperatur herunterkühlen. Der weitere Produktkühler kann beispielsweise an eine Kälteanlage angeschlossen sein. Durch die beschriebene Verwendung einer Wärmepumpe kann der zusätzliche Kältebedarf gegenüber einer vergleichbaren Vorrichtung ohne Wärmepumpe um ca 20% bis 40% reduziert sein. Alternativ kann die Vorrichtung ohne einen solchen weiteren Produktkühler ausgebildet sein (also insbesondere ein einziger dem Produktvorkühler nachgeordnete Produktkühler das Produkt auf die Weiterverarbeitungstemperatur herunterkühlen). Zusätzlich oder alternativ kann die Vorrichtung einen Pufferspeicher zum Speichern des behandelten und gekühlten Produktes, insbesondere vor einem etwaigen späteren Abfüllen, umfassen.

Die Vorrichtung kann eine Steuerung mit Mitteln umfassen, die so angepasst sind, dass sie die Vorrichtung steuern, ein Verfahren auszuführen, dass die folgenden Schritte umfasst:
- Vorwärmen des zu behandelnde flüssige Lebensmittelprodukt im Produktvorwärmer,
- Erhitzen des flüssigen Lebensmittelprodukts auf die Behandlungstemperatur im Produkterhitzer;
- Abkühlen des behandelten flüssigen Lebensmittelproduktes im Produktvorkühler,
- mindestens teilweises Übertragen der im Produktvorkühler anfallenden Wärme an den Produktvorwärmer,
- Versorgen des Produkterhitzers durch einen Hochtemperaturkreislauf mit Wärme, wobei in diesem Hochtemperaturkreislauf die Wärmesenke einer Wärmepumpe angeordnet ist, wobei im Produktionsmodus die Wärmepumpe dem Hochtemperaturkreislauf Wärme zuführt.

Die Steuerung kann zusätzlich Mittel umfassen, die angepasst sind, dass sie die Vorrichtung steuern, einen, mehrere oder alle der folgenden Schritte durchzuführen (wobei einer, mehrere oder alle der folgenden Schritte auch von einem Verfahren der Erfindung umfasst sein können):
- im Produktionsmodus Zuführen von Wärme durch einen Hochtemperaturkreislauferhitzer, insbesondere ein als Wärmetauscher ausgebildeter Hochtemperaturkreislauferhitzer, an den Hochtemperaturkreislauf oder einem Sekundärkreises eines Erhitzers des Hochtemperaturkreislauferhitzers,
- Hochfahren und/oder Herunterfahren der Vorrichtung,
- Betreiben der Vorrichtung, insbesondere beim Hochfahren und/oder Herunterfahren der Vorrichtung, mit Wasser im Produktbehandlungsweg; wobei insbesondere das Wasser in einem Kreislauf befördert wird;
- Umschalten in den Produktionsmodus;
- Umschalten aus dem Produktionsmodus;
- Betreiben der Wärmepumpe der Vorrichtung auch ohne Produkt im Produktbehandlungsweg;
- Bereitstellen von fehlender Wärme beim Hochfahren der Vorrichtung im Hochtemperaturkreis durch den Hochtemperaturkreislauferhitzer und/oder den Hochtemperaturkreislaufenergiespeichertank und/oder
- Bereitstellen von fehlender Kühlung im Niedertemperaturkreislauf durch den Niedertemperaturkreislaufkühler und/oder den Niedertemperaturkreislaufenergiespeichertank beim Herunterfahren der Vorrichtung.

Das Umschalten in den Produktionsmodus und/oder Umschalten aus dem Produktionsmodus kann beispielsweise durch eine oder mehrere Weiterschaltbedingungen ausgelöst werden. Die eine oder mehreren Weiterschaltbedingungen können insbesondere an Messwerte von einem oder mehreren von der Vorrichtung umfassten Sensoren geknüpft sein. Der oder die Sensoren können insbesondere einen oder mehrere Temperatur-, Volumenstrom- und/oder Drucksensoren und/oder Signalempfänger umfassen.

Beispielsweise kann, wenn beim Hochfahren ein für die Produktion notwendiges Temperaturprofil durch zwei oder mehr Temperaturmessungen an Sensoren der Vorrichtung gemessen wird und/oder ein Signal von einem weiteren Systemteil (z.B. einer Abfüllanlage) empfangen wird, ein Umschalten in den Produktionsmodus ausgelöst werden, oder ein entsprechender Hinweis zum Umschalten an einen Benutzer ausgegeben werden. Das Umschalten kann durch die Steuerung oder, insbesondere aufgrund des Hinweises, manuell ausgelöst werden, und insbesondere umfassen, dass ein Ventil geschaltet wird, so dass Produkt durch die Vorrichtung fließt und das Wasser aus der Vorrichtung ausschiebt.

Ebenso kann, z.B. nach Ablauf einer vorherbestimmten Produktionszeit und/oder wenn eine bestimmte Menge an Produkt abgefüllt wurde und/oder wenn ein Stopp-Signal einer Abfüllvorrichtung erhalten wird, ein Umschalten aus dem Produktionsmodus erfolgen. Dabei kann insbesondere ein oder mehrere Ventile geschaltete werden, so dass Wasser das Produkt austreiben kann. Insbesondere sobald kein Produkt mehr in der Vorrichtung ist, kann dann das Wasser in den Kreislaufbetrieb geschaltet werden.

Die Steuerung kann des Weiteren Mittel umfasst, die so angepasst sind, dass sie die Vorrichtung steuern, ein Verfahren auszuführen, das einen, mehrere oder alle zuvor im Zusammenhang mit der Vorrichtung beschriebenen Verfahrensschritte oder im Folgenden in Bezug auf das zugehörige Verfahren beschriebene Schritte ausführt.

Die Erfindung umfasst des Weiteren eine Lebensmittelverarbeitungsanlage zum Erhitzen und Abfüllen eines flüssigen Lebensmittelproduktes. Die Lebensmittelverarbeitungsanlage umfasst insbesondere eine zuvor beschriebene Vorrichtung und eine dieser Vorrichtung nachgeschaltete Abfüllanlage für das behandelte (pasteurisierte) Produkt. Die Abfüllanlage kann insbesondere dazu ausgebildet sein, das behandelte Produkt in Kartons, Flaschen, Dosen oder andere Behälter abzufüllen.

Die Erfindung umfasst zudem ein Verfahren zum Erhitzen eines flüssigen Lebensmittelproduktes, das insbesondere in einer zuvor beschriebenen Vorrichtung oder in einer zuvor beschriebenen Lebensmittelverarbeitungsanlage durchgeführt werden kann. Das Verfahren kann insbesondere einen, mehrere oder alle zuvor im Zusammenhang mit der Vorrichtung beschriebenen Schritte umfassen.

Das Verfahren umfasst ein Vorwärmen des Produktes, insbesondere in einem Produktvorwärmer, ein Erhitzen des Produktes, insbesondere in einem Produktvorkühler, ein Abkühlen des Produktes, insbesondere in einem Produktvorkühler, ein mindestens teilweises Übertragen der im Produktvorkühler anfallenden Wärme an den Produktvorwärmer und ein Versorgen des Produkterhitzers durch einen Hochtemperaturkreislauf mit Wärme, wobei in diesem Hochtemperaturkreislauf die Wärmesenke einer Wärmepumpe angeordnet ist, wobei im Produktionsmodus die Wärmepumpe dem Hochtemperaturkreislauf Wärme zuführen.

Im Produktionsmodus kann ein Hochtemperaturkreislauferhitzer, insbesondere ein als Wärmetauscher ausgebildeter Hochtemperaturkreislauferhitzer, dem Hochtemperaturkreislauf oder einem Sekundärkreises eines Erhitzers des Produkterhitzers Wärme zuführen. Alternativ oder zusätzlich kann das Verfahren umfassen, die Vorrichtung zur indirekten Erhitzung eines flüssigen Lebensmittelproduktes hochzufahren und/oder herunterzufahren.

Zusätzlich kann es auch ein weiteres Abkühlen des Produktes in einem Produktkühler und ggf. weiteren Produktkühler (falls vorhanden) und/oder ein Speichern des behandelten Produktes in einem Pufferspeicher (falls vorhanden).

In einem solchen Verfahren können insbesondere im Produktionsmodus (also insbesondere während ein Produkt behandelt wird, und insbesondere nach dem Hochfahren der Vorrichtung und vor dem Herunterfahren der Vorrichtung) sowohl die Wärmepumpe als auch der Hochtemperaturkreislauferhitzer dem Hochtemperaturkreislauf Wärme zuführen. Dies kann insbesondere ermöglichen, die Wärmepumpe bei einem günstigen Betriebspunkt mit hohem Wirkungsgrad (hohem COP, und somit sehr effizient) zu betreiben.

Das Verfahren kann ein Hochfahren und/oder Herunterfahren einer Vorrichtung umfassen. Mit "Hochfahren" bzw. "Herunterfahren" der Vorrichtung wird hiermit insbesondere der Start- bzw. Stoppvorgang der Vorrichtung beschrieben, in dem die Vorrichtung für den Produktionsbetrieb gestartet wird bzw. aus dem Produktionsbetrieb gestoppt wird. Aufgrund der Eigenschaften einer Wärmepumpe kann es länger dauern, eine Wärmepumpe zu starten bzw. zu stoppen als die anderen Elemente der Vorrichtung zu starten bzw. zu stoppen.

Insbesondere kann daher beim Hochfahren der Vorrichtung die Vorrichtung mit Wasser im Produktbehandlungsweg betrieben werden. Die Wärmepumpe kann somit insbesondere gestartet werden, ohne dass durch die beim Startvorgang noch niedrigere Temperatur eine mangelnde Produktbehandlung riskiert wird. Sobald die Wärmepumpe hochgefahren ist, kann das Produkt in den Produktbehandlungsweg geführt werden. Dabei kann das Produkt das Wasser aus dem Produktbehandlungsweg ausschieben. Anschließend kann dann der Produktionsmodus gestartet werden. Alternativ oder zusätzlich kann beim Herunterfahren der Vorrichtung die Vorrichtung mit Wasser im Produktbehandlungsweg weiter betrieben werden, um einen Stoppvorgang der Wärmepumpe zu ermöglichen.

Beim Betrieb mit Wasser im Produktbehandlungsweg kann insbesondere das Wasser in einem Kreislauf befördert werden. Damit kann beispielsweise der Wasserverbrauch reduziert werden.

Alternativ oder zusätzlich kann beim Herunterfahren der Vorrichtung die Produktmenge im Produktbehandlungsweg gleichläufig zur Leistung der Wärmepumpe bis zur unteren Auslegungsgrenze der Vorrichtung reduziert werden. Somit kann insbesondere beim Abschaltvorgang der Wärmepumpe anfallende Energie noch möglichst effizient genutzt werden.

Insbesondere kann beispielsweise beim Herunterfahren der Vorrichtung der Abschaltvorgang der Wärmepumpe vor dem Abschaltvorgang den anderen Komponenten der Vorrichtung eingeleitet werden oder ihre Leistung im Rahmen der Abschaltung reduziert werden, so dass sie insbesondere den Abschaltvorgang gestartet haben kann oder die Leistung reduzieren kann, bevor die Produktmenge im Produktbehandlungsweg reduziert wird. Eine Reduzierung der Produktmenge im Produktbehandlungsweg gleichläufige zur Leistung der Wärmepumpe bis zur unteren Auslegungsgrenze der Vorrichtung kann somit insbesondere ermöglichen, die Energie beim Abschaltvorgang der Wärmepumpe effizient zu nutzen.

Alternativ oder zusätzlich kann die Wärmepumpe im Verfahren (zumindest zeitweise) auch dann betrieben werden, wenn kein Produkt im Produktbehandlungsweg vorhanden ist. Dies kann beispielsweise beim Hoch- oder Runterfahren, bei einer Produktionsunterbrechung oder einem Produktwechsel der Fall sein. Insbesondere kann dann im Produktbehandlungsweg (statt des Produktes) Wasser oder kein Medium sein.

Das Verfahren kann umfassen, beim Hochfahren der Vorrichtung fehlende Wärme im Hochtemperaturkreislauf durch den Hochtemperaturkreislauferhitzer und/oder den Hochtemperaturenergiespeichertank bereitzustellen. Insbesondere kann es zum Fehlen von Wärme kommen, wenn die Wärmepumpe mehr Zeit zum Starten benötigt als die anderen Bestandteile der Vorrichtung.

Das Verfahren kann alternative oder zusätzlich umfassen, beim Herunterfahren der Vorrichtung fehlende Kühlung im Niedertemperaturkreislauf durch den Niedertemperaurkreislaufkühler und/oder den Niedertemperaturspeichertank bereitzustellen. Insbesondere kann es zum Fehlen von Kühlung kommen, wenn die Wärmepumpe mehr Zeit zum Starten benötigt als die anderen Bestandteile der Vorrichtung.

Das Verfahren kann alternativ oder zusätzlich umfassen, den Hochtemperaturkreislauf durch den Hochtemperaturkreislaufkühler zu kühlen, um überschüssige Wärme aufzunehmen und/oder überschüssige Wärme dem Hochtemperaturkreisenergiespeichertank zuzuführen. Das Verfahren kann alternativ oder zusätzlich auch umfassen, den Niedertemperaturkreislauf durch den Niedertemperaturkreislauferhitzer zu heizen, um überschüssige Kühlung zu vermeiden und/oder Wärme aus dem Niedertemperaturkreislaufenergiespeicher abzuführen, um die überschüssige Kühlung zu vermeiden. Zu einer solchen überschüssigen Wärme bzw. überschüssiger Kühlung kann es insbesondere beim Herunterfahren der Vorrichtung kommen, wenn die Wärmepumpe noch Wärme abgibt bzw. aufnimmt ohne dass noch ein Produkt im Produktweg diese Wärme aufnehmen bzw. abgeben kann.

Weiter Aspekte der Erfindung sind in den folgenden schematischen und nicht maßstabsgetreuen Figuren ersichtlich.

Hierbei zeigt
Figur 1 eine Vorrichtung zur indirekten Erhitzung eines flüssigen Lebensmittelproduktes;
Figur 2a einen beispielhaften Hochtemperaturkreislauf und Figur 2b einen weiteren beispielhaften Hochtemperaturkreislauf;
Figur 3a einen beispielhaften Niedertemperaturkreislauf und Figur 3b einen weiteren beispielhaften Niedertemperaturkreislauf;
Figur 4 Schritte eines beispielhaften Verfahrens;
Figur 5 eine Behälterbehandlungsanlage.

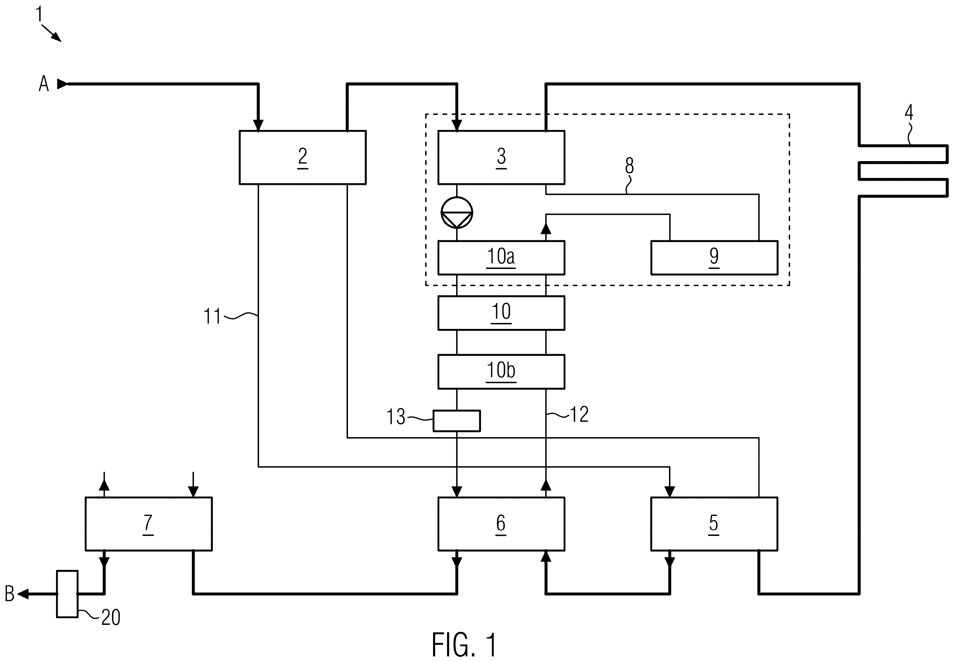

Figur 1 zeigt beispielhaft eine Vorrichtung 1 zur indirekten Erhitzung eines flüssigen Lebensmittelproduktes.

Das Produkt wird der Vorrichtung 1 durch Eingang A zugeführt. In der Vorrichtung 1 wird das Produkt entlang dem Produktbehandlungsweg und, nach seiner Behandlung, durch Ausgang B von der Vorrichtung weggeführt.

Die Vorrichtung 1 umfasst einen Produktvorwärmer 2, durch den das Produkt (indirekt) vorgewärmt wird. Stromabwärts des Produktvorwärmers 2 wird das Produkt durch einen (indirekten) Erhitzer 3 durchgeführt, in dem das Produkt auf die Behandlungstemperatur erhitzt wird. Das Produkt wird anschließend für einen Haltezeitraum heiß gehalten, hier in einer optionalen Heißhaltestrecke 4. Anschließen wird das Produkt durch Produktvorkühler 5 geleitet, in dem es (indirekt) von der Behandlungstemperatur auf eine kühlere Temperatur heruntergekühlt wird. Zwischen Produktvorwärmer und Produktvorkühlerfindet ein regenerativer Wärmetausch statt, durch den Wärme aus dem behandelten Produkt zurückgewonnen wird, um das zu behandelnde Produkt zu erwärmen.

Beispielhaft findet in Figur 1 der Wärmetausch über einen Sekundärkreislauf 11 mit einem Betriebsmedium (z.B. Wasser) statt. In alternativen Ausführungsformen (hier nicht gezeigt), kann der Wärmetausch auch über einen einzelnen Wärmetauscher ausgeführt werden, der den Produktvorwärmer 2 und den Produktvorkühler 5 umfasst, so dass über diesen Wärmetauscher die Wärme vom behandelten Produkt auf das zu behandelnde Produkt übertragen wird.

Stromabwärts des Produktvorkühlers 5 ist ein Produktkühler 6 angeordnet. In diesem wird das (durch den Produktvorkühler vorgekühlte) Produkt weiter gekühlt. Anschließend kann es durch einen optional von der Vorrichtung umfassten weiteren Produktkühler 7 auf die Weiterverarbeitungstemperatur abgekühlt werden, bevor es durch Ausgang B aus der Vorrichtung geführt wird. In anderen Beispielen (hier nicht gezeigt) kann die Vorrichtung ohne weiteren Produktkühler 7 ausgebildet sein, und das Produkt bereits im Produktkühler 6 auf die Weiterverarbeitungstemperatur abgekühlt werden. Optional kann die Vorrichtung (insbesondere stromabwärts von Produktkühler 7 und stromaufwärts des Ausgangs B angeordnet) einen Pufferspeicher 20 zur Speicherung des Produkts umfassen.

Der Produkterhitzer 3 wird durch einen Hochtemperaturkreislauf 8 mit Wärme versorgt. Im Hochtemperaturkreislauf wird das Medium des Hochtemperaturkreislaufs, z.B. Wasser, beispielsweise durch eine Pumpe befördert. Im Hochtemperaurkreislauf 8 ist eine Wärmesenke 10a einer Wärmequelle 10 angeordnet, die dazu ausgebildet ist, im Betrieb das Medium des Hochtemperaturkreislaufs zu heizen. Zusätzlich ist im Hochtemperaturkreislauf ein Hochtemperaturkreislauferhitzer 9 angeordnet, der beispielweise als ein (z.B. durch Dampf oder Heißwasser heizbarer) Wärmetauscher ausgebildet sein kann.

Insbesondere kann der Hochtemperaturkreislauferhitzer 9 zwischen dem Auslauf des Hochtemperaturkreislaufs 8 aus der Wärmesenke 10a und dem Einlauf des Hochtemperaturkreislaufs in den Erhitzer 3 angeordnet sein.

Der Hochtemperaturkreislauf 8 kann in einigen Beispielen zusätzlich einen Hochtemperaturkreislaufkühler umfassen (nicht gezeigt), muss aber einen solchen nicht umfassen. Der Hochtemperaturkreislaufkühler kann insbesondere zwischen Auslauf des Hochtemperaturkreislaufs 8 aus dem Produkterhitzer 3 und dem Einlauf des Hochtemperaturkreislaufs 8 in die Wärmesenke 10a angeordnet sein. Der Hochtemperaturkreislaufkühler kann insbesondere genutzt werden, um falls notwendig (z.B. während dem Herunterfahren der Vorrichtung, wenn die Wärmepumpe noch überschüssige Wärme bereitstellt) Kühlung für die Wärmesenke der Wärmepumpe bereitzustellen. Alternativ oder zusätzlich kann der Hochtemperaturkreislauf 8 einen Hochtemperaturkreislaufenergiespeichertank umfassen (in der Figur nicht gezeigt).

Die Vorrichtung umfasst des Weiteren beispielhaft einen Niedertemperaturkreislauf 12, der den Produktkühler 6 kühlt. In diesem ist beispielhaft die Wärmequelle 10b der Wärmepumpe 10 angeordnet. Somit kann die Wärmepumpe 10 Energie nutzen, die beim Kühlen des Produktes im Produktkühler 6 anfällt und diese dem Hochtemperaturkreislauf 8 zum Erwärmen des Erhitzers 3 zur Verfügung stellen.

Der Niedertemperaturkreislauf 12 kann optional einen Niedertemperaturkreislauferhitzer umfassen, der insbesondere zwischen dem Auslauf des Niedertemperaturkreislaufs 12 aus dem Produkterhitzer 6 und dem Einlauf der Wärmequelle 10b angeordnet sein kann. Alternativ oder zusätzlich kann der Niedertemperaturkreislauf 12 auch einen Niedertemperaturkreislaufenergiespeichertank umfassen (beides nicht gezeigt). In anderen Beispielen kann der Niedertemperaturkreislauf auch ohne eine Wärmequelle der Wärmepumpe ausgebildet sein (nicht gezeigt). Beispielsweise kann die Wärmequelle der Wärmepumpe alternativ zu einer Anordnung im Niedertemperaturkreislauf mit einem zentralen Heiß- oder Warmwassernetz verbunden sein. Insbesondere kann damit die Wärmepumpe mit einem besseren Wirkungsgrad betrieben werden, was sich positiv auf die Wirtschaftlichkeit der Wärmepumpe auswirken kann.

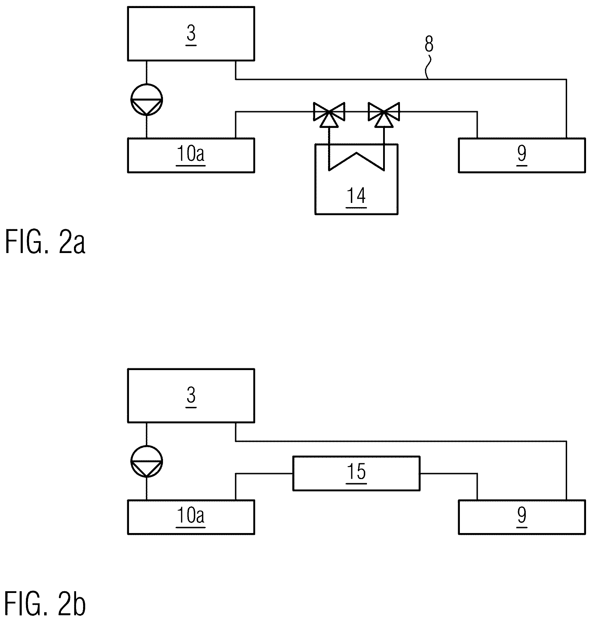

Die Figuren 2a und 2b zeigen mögliche Beispiele für Hochtemperaturkreisläufe, die auch in der Vorrichtung, die in Figur 1 beschrieben ist, als Alternative zu dem dort gezeigten Hochtemperaturkreislauf verwendet werden können.

Hierbei zeigt Figur 2a einen Hochtemperaturkreislauf 8, der den Produkterhitzer 3 mit Wärme versorgen kann. Dieser umfasst beispielhaft eine Pumpe, eine Wärmesenke 10a einer Wärmepumpe 10 und einen zwischen dem Auslauf der Wärmesenke 10a und dem Einlauf des Hochtemperaturkreislauferhitzers 9 angeordneten Hochtemperaturkreislaufenergiespeichertank 14, der energetisch (z.B. strömungs- oder wärmeleitend) mit dem Hochtemperaturkreislauf 8 verbunden sein kann. In diesen Hochtemperaturkreislaufenergiespeichertank 14 kann Energie eingespeichert werden, wenn die Wärmepumpe mehr Wärme erzeugt, als gerade (z.B. aufgrund eines Abschaltprozesses) benötigt wird. Zudem kann aus dem Hochtemperaturkreislaufenergiespeichertank 14 Wärme entnommen werden, beispielsweise beim Hochfahren der Vorrichtung, wenn die Wärmepumpe noch nicht auf Nennleistung läuft.

Figur 2b zeigt einen Hochtemperaturkreislauf 8, der den Produkterhitzer 3 mit Wärme versorgen kann. Wie der in Figur 2a gezeigte Hochtemperaturkreislauf 8, umfasst er eine Pumpe, die Wärmesenke 10a einer Wärmepumpe 10 und einen Hochtemperaturkreislauferhitzer 9, die in Bezug aufeinander auch gleich wie in Figur 2a gezeigt angeordnet sein können. Abweichend von Figur 2a ist statt eines Hochtemperaturkreislaufenergiespeichertanks 14 ein Hochtemperaturkreislaufkühler 15 angeordnet, der an entsprechender Stelle wie der Hochtemperaturkreislaufenergiespeichertank 14 angeordnet sein kann. Der Hochtemperaturkreislaufkühler 15 kann insbesondere dazu dienen, den aus dem Auslauf der Wärmesenke 10a kommenden Hochtemperaturkreislauf 8 zu kühlen, um überschüssige Wärme, z.B. beim Herunterfahren der Vorrichtung, zu entfernen.

Die in den Figuren 2a und 2b zusätzlich zu den in Figur 1 beschriebenen Elemente können auch einzeln oder zusammen, insbesondere in entsprechender Anordnung, in den Hochtemperaturkreislauf 8 der Figur 1 umfasst sein.

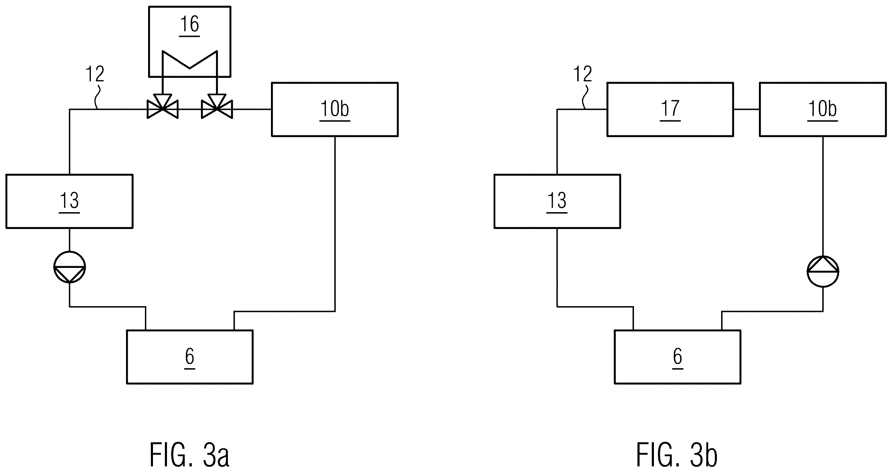

Die Figuren 3a und 3b zeigen mögliche Beispiele für Niedertemperaturkreisläufe 12, die auch in der Vorrichtung 1, die in Figur 1 beschrieben ist, als Alternative zu dem dort gezeigten Niedertemperaturkreislauf 12 verwendet werden können. Hierbei können die beiden beschriebenen Niederenergietemperaturkreise 12 jeweils mit dem in Figur 1, Figur 2a und Figur 2b gezeigten und/oder im Zusammenhang damit beschriebenen Hochtemperaturkreisläufen verwendet werden.

Figur 3a zeigt einen Niedertemperaturkreislauf 12, der dazu ausgebildet ist, den Produktkühler 6 zu kühlen. Im Niedertemperaturkreislauf 12 ist die Wärmequelle 10b der Wärmepumpe 10 angeordnet. In dem in Figur 3a gezeigten Niedertemperaturkreislauf 12 ist zusätzlich zwischen Auslauf des Niedertemperaturkreislaufs 12 aus der Wärmequelle 10b und dem Einlauf des Niedertemperaturkreislaufs 12 in den Niedertemperaturkreislaufkühler 13 ein Niedertemperaturkreislaufenergiespeichertank 16 angeordnet, der mit dem Niedertemperaturkreislauf 12 energetisch verbunden ist und in den überschüssige Kälte gespeichert (aus dem Wärme entnommen) werden kann, z.B. wenn die Wärmepumpe länger Kälte erzeugt als diese beim Herunterfahren der Vorrichtung benötigt wird. Umgekehrt kann diesem Kälte entnommen (ihm Wärme zugeführt) werden, z.B., wenn beim Hochfahren der Vorrichtung zusätzliche Kühlung benötigt wird.

Figur 3b zeigt einen alternativen Niedertemperaturkreislauf 12, in dem zwischen dem Auslauf des Niedertemperaturkreislaufs 12 aus der Wärmequelle 10b und dem Einlauf des Niedertemperaturkreislaufs 12 in den Niedertemperaturkreislaufkühler 13 ein Niedertemperaturkreislauferhitzer 17 angeordnet ist (also an der gleichen Stelle wie in Figur 3b der Niedertemperaturkreislaufenergiespeichertank 16). Mit einem solchen Niedertemperaturkreislauferhitzer 17 kann insbesondere durch zusätzliches Heizen überschüssige Kälte aufgenommen (zusätzliche Wärme zugeführt) werden, z.B. wenn die Wärmepumpe länger Kälte erzeugt als diese beim Herunterfahren der Vorrichtung benötigt wird.

Der Niedertemperaturkreislauf 12 von Fig. 3b kann alternativ auch ohne Niedertemperaturkreislaufkühler 13 ausgebildet sein (nicht gezeigt). In diesem Fall erfolgt die Kühlung des behandelten Produktes auf die erforderliche Abfülltemperatur mittels des Produktkühlers 7.

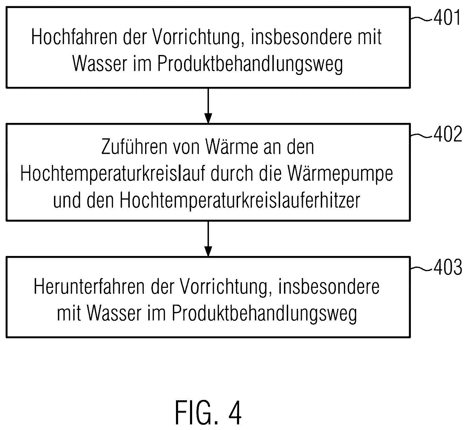

Figur 4 zeigt beispielhaft Schritte eines Verfahrens, das in einer Vorrichtung zur indirekten Erhitzung eines Lebensmittelproduktes ausgeführt werden kann.

Insbesondere zeigt sie ein Verfahren zur Erhitzung eines flüssigen Lebensmittelproduktes, das umfasst, die Vorrichtung hochzufahren (Schritt 401). Beim Hochfahren der Vorrichtung kann diese insbesondere mit Wasser im Produktbehandlungsweg betrieben werden. Insbesondere erfolgt das Hochfachen der Vorrichtung mit Wasser im Kreislauf, so dass das Wasser, welches die Anlage über den Ausgang verlässt, wieder dem Eingang zugeführt wird. Dadurch kann Wasser eingespart werden. Ein Hochfahren der Vorrichtung kann auch ein zeitgleiches Hochfahren der Wärmepumpe, insbesondere auf Nennleistung, beinhalten.

Sobald die Vorrichtung auf Produktionsbedingungen ist, also insbesondere der Hochtemperaturkreislauf die für den Produkterhitzer notwendige Wärme zur Verfügung stellen kann, kann dann das Wasser durch das Produkt ausgeschoben werden und der Produktionsvorgang gestartet werden. In anderen Beispielen wird die Vorrichtung beim Hochfahren der Vorrichtung nicht mit Wasser im Produktbehandlungsweg betrieben (nicht gezeigt).

Im Produktionsmodus, also, wenn ein Produkt behandelt wird, kann (zumindest zeitweise) das Zuführen von Wärme an den Hochtemperaturkreislauf durch die Wärmepumpe und den Hochtemperaturkreislauferhitzer gleichzeitig erfolgen. Somit kann insbesondere die Wärmepumpe an einem günstigen Betriebspunkt (z.B. bei ihrer Nennleistung) laufen, und die zusätzlich benötigte Wärme durch den Hochtemperaturkreislauferhitzer zugeführt werden. Insgesamt kann die Vorrichtung dadurch besonders effizient betrieben werden.

Am Ende des Produktionsbetriebs (also wenn alles Produkt behandelt ist oder in Kürze die Produktbehandlung beendet werden soll, kann die Vorrichtung heruntergefahren werden.

Beim Herunterfahren der Vorrichtung, kann in einigen Beispielen der Abschaltvorgang der Wärmepumpe begonnen werden, während noch Produkt behandelt wird, und die Leistung der Vorrichtung im Gleichklang mit der Leistungsreduktion der Wärmepumpe reduziert werden, insbesondere bis zur unteren Auslegungsgrenze der Produktionsmenge (hier nicht gezeigt). In anderen Beispielen erfolgt dieser Schritt nicht.

Das Herunterfahren der Vorrichtung kann insbesondere (zumindest zeitweise) mit Wasser im Produktbehandlungsweg erfolgen. Dann kann das Wasser im Produktionsweg (zumindest zeitweise) beim Herunterfahren der Vorrichtung überschüssige Wärme aus dem Hochtemperaturkreislauf aufnehmen. Insbesondere erfolgt das Herunterfahren der Vorrichtung mit Wasser im Kreislauf, so dass das Wasser, welches die Anlage über den Ausgang verlässt, wieder dem Eingang zugeführt wird. Dadurch kann Wasser eingespart werden. Ein Herunterfahren der Vorrichtung kann auch ein zeitgleiches Herunterfahren der Wärmepumpe oder Abschalten der Wärmepumpe beinhalten.

Alternativ oder zusätzlich kann überschüssige Wärme im Hochtemperaturkreislauf und/oder überschüssige Kälte im Niedertemperaturkreislauf durch den Hochtemperaturkreislaufkühler und/oder den Niedertemperaturkreislauferhitzer aufgenommen werden (nicht gezeigt).

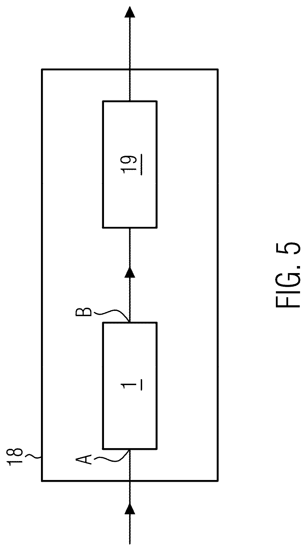

Figur 5 zeigt beispielhaft eine Lebensmittelverarbeitungsanlage, die eine zuvor beschriebene Vorrichtung 1 mit Eingang A für das zu behandelnde Produkt und Ausgang B für das behandelte Produkt. Am Ausgang B der Vorrichtung ist eine Abfüllanlage 19 zum Abfüllen des Produktes, z.B. in Behälter, Kartons, Flaschen oder Dosen angeordnet, in der das behandelte Produkt abgefüllt wird. Die Vorrichtung 1 und Abfüllanlage 19 können über ein Rohr oder ähnliches miteinander verbunden sein.

## Patentansprüche

1. Vorrichtung (1) zur indirekten Erhitzung eines flüssigen Lebensmittelproduktes, umfassend einen Produktvorwärmer (2), in dem das zu behandelnde flüssige Lebensmittelprodukt vorgewärmt wird, einen Produkterhitzer (3) zum Erhitzen des flüssige Lebensmittelprodukts auf die Behandlungstemperatur und einen Produktvorkühler (4), in dem das behandelte flüssige Lebensmittelprodukt abgekühlt wird, wobei die im Produktvorkühler (4) anfallende Wärme mindestens teilweise an den Produktvorwärmer (2) übertragen wird,
**gekennzeichnet dadurch, dass** der Produkterhitzer (3) durch einen Hochtemperaturkreislauf (8) mit Wärme versorgt wird, und in diesem Hochtemperaturkreislauf die Wärmesenke (10a) einer Wärmepumpe (10) angeordnet ist.

2. Vorrichtung (1) nach Anspruch 1, wobei im Hochtemperaturkreislauf ein Hochtemperaturkreislauferhitzer (9), insbesondere ein als Wärmetauscher ausgebildeter Hochtemperaturkreislauferhitzer, angeordnet ist, wobei der Hochtemperaturkreislauferhitzer (9) insbesondere zwischen dem Auslauf der Wärmesenke (10a) und dem Einlauf des Hochtemperaturkreislaufs in den Produkterhitzer (3) angeordnet ist .

3. Vorrichtung (1) nach Anspruch 1 oder Anspruch 2, wobei der Produkterhitzer zwei separate Erhitzer mit jeweils einem Sekundärkreislauf umfasst, insbesondere wobei der Hochtemperaturkreislauf der Sekundärkreislauf des ersten Erhitzers ist und im Sekundärkreislauf des zweiten Erhitzers ein Hochtemperaturkreislauferhitzer (9), insbesondere ein als Wärmetauscher ausgebildeter Hochtemperaturkreislauferhitzer, angeordnet ist.

4. Vorrichtung (1) nach einem der Ansprüche 1 bis 3, die Wärmepumpe (10) so ausgelegt ist, dass dem zu behandelnden flüssigen Lebensmittelprodukt bei der Nennleistung eine bestimmte, vordefinierte Wärmemenge zugeführt wird und/oder umfassend einen Produktkühler (6) zum Kühlen des behandelten flüssigen Lebensmittelproduktes, der durch einen Niedertemperaturkreislauf (12) gekühlt wird, wobei der Produktkühler (6) insbesondere stromabwärts des Produktvorkühlers (5) angeordnet ist.

5. Vorrichtung (1) nach einem der Anspruch 4, wobei die Wärmequelle (10b) der Wärmepumpe (10) in dem Niedertemperaturkreislauf (12) angeordnet ist.

6. Vorrichtung (1) nach einem der Ansprüche 1 bis 5, wobei der Niedertemperaturkreislauf (12) einen Niedertemperaturkreislaufkühler (13) und/oder Niedertemperaturkreislauferhitzer (17) umfasst,
und/oder
wobei der Hochtemperaturkreislauf (11) zusätzlich einen Hochtemperaturkreislaufkühler (15) umfasst.

7. Vorrichtung (1) nach einem der Ansprüche 1 bis 6, wobei der Hochtemperaturkreislauf (8) mit einem Hochtemperaturkreislaufenergiespeichertank (14) energetisch verbunden ist und/oder wobei der Niedertemperaturkreislauf (12) mit einem Niedertemperaturenergiespeichertank (16) energetisch verbunden ist, wobei insbesondere der Hochtemperaturkreislaufenergiespeichertank (14) und/oder der Niedertemperaturenergiespeichertank (16) als zentraler Energiespeichertank ausgebildet ist, mit dem insbesondere zusätzliche der Behandlung in der Vorrichtung zur indirekten Erhitzung von einem flüssigen Lebensmittelprodukt vor- und nachgelagerte Prozesse mit Energie versorgt werden können bzw. in den vor- und nachgelagerte Prozesse Energie einspeichern können,
und/oder
wobei die Vorrichtung (1) einen weiteren Produktkühler (7) und/oder eine Speichervorrichtung (20) für das behandelte Produkt umfasst.

8. Vorrichtung (1) nach einem der Ansprüche 1 bis 7, wobei die Vorrichtung (1) einen Sekundärkreislauf (11) zum Transport von Wärme vom Produktvorkühler (5) zum Produktvorwärmer (2) umfasst oder wobei der Produktvorwärmer (2) und der Produktvorkühler (5) als zwei Teile oder Bereiche eines Wärmetauschers ausgebildet sind, der dazu ausgebildet ist, Wärme vom behandelten flüssigen Lebensmittelprodukt auf das zu behandelnde flüssige Lebensmittelprodukt zu übertragen.

9. Vorrichtung (1) nach einem der Ansprüche 1 bis 8, wobei die Vorrichtung (1) eine Steuerung mit Mitteln umfasst, die so angepasst sind, dass sie die Vorrichtung (1) steuern, ein Verfahren auszuführen, dass die folgenden Schritte umfasst:
Vorwärmen des zu behandelnde flüssige Lebensmittelprodukt im Produktvorwärmer (2),
Erhitzen des flüssigen Lebensmittelprodukts auf die Behandlungstemperatur im Produkterhitzer (3);
Abkühlen des behandelten flüssigen Lebensmittelproduktes im Produktvorkühler (4),
mindestens teilweises Übertragen der im Produktvorkühler (4) anfallenden Wärme an den Produktvorwärmer (2),
Versorgen des Produkterhitzers (3) durch einen Hochtemperaturkreislauf (8) mit Wärme, wobei in diesem Hochtemperaturkreislauf die Wärmesenke (10a) einer Wärmepumpe (10) angeordnet ist, wobei im Produktionsmodus die Wärmepumpe (10) dem Hochtemperaturkreislauf (8) Wärme zuführen,
wobei die Steuerung zusätzlich Mittel umfassen kann, die angepasst sind, dass sie die Vorrichtung (1) steuern, einen, mehrere oder alle der folgenden Schritte durchzuführen:
im Produktionsmodus Zuführen von Wärme durch einen Hochtemperaturkreislauferhitzer (9), insbesondere ein als Wärmetauscher ausgebildeter Hochtemperaturkreislauferhitzer, an den Hochtemperaturkreislauf (8) oder einem Sekundärkreises eines Erhitzers des Produkterhitzers, Hochfahren und/oder Herunterfahren der Vorrichtung,
Betreiben der Vorrichtung (1) beim Hochfahren und/oder Herunterfahren der Vorrichtung mit Wasser im Produktbehandlungsweg, insbesondere beim Hoch- und/oder Runterfahren; wobei insbesondere das Wasser in einem Kreislauf befördert wird;
Betreiben der Wärmepumpe (10) der Vorrichtung auch ohne Produkt im Produktbehandlungsweg;
Bereitstellen von fehlender Wärme beim Hochfahren der Vorrichtung im Hochtemperaturkreis durch den Hochtemperaturkreislauferhitzer und/oder den Hochtemperaturkreislaufenergiespeichertank und/oder
Bereitstellen von fehlender Kühlung im Niedertemperaturkreislauf durch den Niedertemperaturkreislaufkühler und/oder den Niedertemperaturkreislaufenergiespeichertank beim Herunterfahren der Vorrichtung.

10. Lebensmittelverarbeitungsanlage (18) zum Erhitzen und Abfüllen eines flüssigen Lebensmittelproduktes, **dadurch gekennzeichnet, dass** sie eine Vorrichtung (1) zur indirekten Erhitzung eines flüssigen Lebensmittelproduktes nach einem der vorhergehenden Ansprüche und eine dieser Vorrichtung (1) nachgeschaltete Abfüllanlage (19) für das behandelte Produkt umfasst.

11. Verfahren zum Erhitzen eines flüssigen Lebensmittelproduktes, **gekennzeichnet dadurch, dass** es in einer Vorrichtung (1) zur indirekten Erhitzung eines flüssigen Lebensmittelproduktes durchgeführt wird, insbesondere einer Vorrichtung (1) nach einem der Ansprüche 1 bis 9 oder in einer Lebensmittelverarbeitungsanlage nach Anspruch 10, wobei das Verfahren umfasst:
Vorwärmen des zu behandelnde flüssige Lebensmittelprodukt, insbesondere in einem Produktvorwärmer,
Erhitzen des flüssigen Lebensmittelprodukts auf die Behandlungstemperatur, insbesondere in einem Produkterhitzer (3)
Abkühlen des behandelten flüssigen Lebensmittelproduktes, insbesondere in einen Produktvorkühler (4),
mindestens teilweises Übertragen der im Produktvorkühler (4) anfallenden Wärme an den Produktvorwärmer (2),
Versorgen des Produkterhitzers (3) durch einen Hochtemperaturkreislauf (8) mit Wärme, wobei in diesem Hochtemperaturkreislauf die Wärmesenke (10a) einer Wärmepumpe (10) angeordnet ist, wobei im Produktionsmodus die Wärmepumpe (10) dem Hochtemperaturkreislauf (8) Wärme zuführen.

12. Verfahren nach Anspruch 11, wobei zusätzlich im Produktionsmodus ein Hochtemperaturkreislauferhitzer (9), insbesondere ein als Wärmetauscher ausgebildeter Hochtemperaturkreislauferhitzer, dem Hochtemperaturkreislauf (8) oder einem Sekundärkreises eines Erhitzers des Hochtemperaturkreislauferhitzers Wärme zuführt und/oder wobei das Verfahren umfasst, die Vorrichtung (1) zur indirekten Erhitzung eines flüssigen Lebensmittelproduktes hochzufahren und/oder herunterzufahren.

13. Verfahren nach Anspruch 12, wobei die Vorrichtung (1) zur indirekten Erhitzung eines flüssigen Lebensmittelproduktes beim Hochfahren und/oder Herunterfahren der Vorrichtung mit Wasser im Produktbehandlungsweg betrieben wird, wobei insbesondere das Wasser in einem Kreislauf befördert wird.

14. Verfahren nach Anspruch 12 oder 13, wobei die Wärmepumpe (10) auch dann betrieben wird, wenn kein Produkt im Produktbehandlungswege vorhanden ist.

15. Verfahren nach einem der Ansprüche 12 bis 14, wobei beim Hochfahren der Vorrichtung (1) fehlende Wärme im Hochtemperaturkreislauf (8) durch den Hochtemperaturkreislauferhitzer (9) und/oder den Hochtemperaturkreislaufenergiespeichertank (14) bereitgestellt wird
und/oder
wobei beim Herunterfahren der Vorrichtung (1) fehlende Kühlung im Niedertemperaturkreislauf (12) durch den Niedertemperaturkreislaufkühler (13) und/oder den Niedertemperaturkreislaufenergiespeichertank (16) bereitgestellt wird.
